# EUROPÄISCHE PATENTSCHRIFT

(11) **EP 1 896 746 B1**
(45) Veröffentlichungstag und Bekanntmachung des Hinweises auf die Patenterteilung: **17.11.2010**
(21) Anmeldenummer: 06753279.6
(22) Anmeldetag: 20.06.2006
(51) Int. Cl.: F16D 48/06

(54) **KUPPLUNGSREFERENZPOSITION**
CLUTCH REFERENCE POSITION
POSITION DE RÉFÉRENCE D'EMBRAYAGE

(30) Priorität: 22.06.2005 DE 102005028844
(43) Veröffentlichungstag der Anmeldung: 12.03.2008
(73) Patentinhaber: Schaeffler Technologies GmbH & Co. KG, 91074 Herzogenaurach (DE)
(72) Erfinder: BAEHR, Markus, 77855 Achern (DE); DREHER, Felix, 77815 Bühl (DE); PANZER, Matthias, 76137 Karlsruhe (DE); STENGEL, Frank, 76534 Baden-Baden (DE); FUSS, Martin, Wooster, OH 44691 (US); MARTIN, Jens, 76547 Sinzheim-Kartung (DE); ZIMMERMANN, Martin, 77880 Sasbach (DE); EHRLICH, Matthias, 77815 Bühl (DE); SCHWEIZER, Alexander, 77815 Bühl (DE)
(86) Internationale Anmeldenummer: PCT/DE2006/001041
(87) Internationale Veröffentlichungsnummer: WO 2006/136140

(56) Entgegenhaltungen:
- EP-A- 1 455 106
- DE-A1- 10 027 330
- DE-A1- 19 953 292

## Beschreibung

Die Erfindung betrifft ein Verfahren mit den Merkmalen gemäß dem Oberbegriff von Anspruch 1 sowie eine Vorrichtung mit den Merkmalen gemäß dem Oberbegriff des Anspruchs 10.

In den vergangenen Jahren haben sich automatisierte Kupplungen immer mehr verbreitet. Komfort und Sicherheit werden zunehmend durch den Einsatz von Sensorik und elektronisch initiierten Eingriffen in den Fahrverlauf erhöht.

Aus der Fahrzeugtechnik ist bekannt, dass zum Ansteuern einer Kupplung bei einem automatisierten Getriebe zumindest ein Kupplungsaktor verwendet wird. Wenn bei dem Kupplungsaktor keine absolute Wegmessung verwendet wird, kann eine Inkrementalwegmessung vorgesehen sein, welche entsprechend Inkrementalwegmesssensoren aufweist. Bei der Verwendung von so genannten EC-Motoren sind diese Inkrementalwegmesssensoren direkt in die Motoren integriert.

Es hat sich gezeigt, dass die Inkrementalwegmessung regelmäßig abgeglichen werden sollte. Bei dem Abgleich der Inkrementalwegmessung kann ein Kalibrationspunkt tastend angefahren werden, wobei die Position des Kalibrationspunktes als Nullpunkt oder Kupplungsreferenzposition zum Abgleich der Inkrementalwegmessung verwendet wird.

In der DE 44 33 825 C2 wird eine Stelleinrichtung für eine Kraftfahrzeugreibungskupplung vorgeschlagen. Diese Stelleinrichtung umfasst einen Antrieb, ein dessen Bewegung in eine im Wesentlichen translatorische Bewegung eines Ausgangsgliedes umsetzendes Getriebe, dessen Bewegungsbereich in den möglichen Bewegungsrichtungen durch zumindest einen in diesen Richtungen wirksamen Anschlag begrenzt ist sowie eine Kupplungslageregelung. Die Kupplungslageregelung weist eine Überwachungsvorrichtung auf, in der eine Messvorrichtung den Antrieb auf Energiezufuhr und Wirkrichtung der zugeführten Energie überprüft und ein Inkrementalgeber Stellungsänderungen des Getriebes überwacht. Ergibt eine Energiezufuhr am Antrieb keine Stellungsänderung am Inkrementalgeber, belegt dies das Erreichen des in der Wirkrichtung liegenden Anschlags und hat die Festschreibung der erreichten Stellung als neue Anschlagstellung in der Messvorrichtung zur Folge.

In der DE 100 27 330 A1 wird ein Verfahren zum Betreiben einer Drehmomentübertragungseinrichtung vorgeschlagen. Dabei wird überprüft, ob sich ein beweglich angeordnetes Schaltelement, welches belastet wurde, in einer Schaltstellung befindet, die der Position eines Endanschlags entspricht oder die einer Schaltstellung entspricht, welche sich innerhalb eines Toleranzbereiches, welcher um eine Zielschaltstellung angeordnet ist, befindet. Sofern dies der Fall ist, wird für eine vorbestimmte, kurze Zeitspanne eine kleine Entlastungsspannung von der Steuerungseinrichtung aufgebracht. Die durch dieses Entlastungssignal erzeugte Bewegung des beweglich angeordneten Schaltelements ist insbesondere von einem Endanschlag weggerichtet. Durch die Entlastungsspannung werden Selbsthaltekräfte des Elektromotors oder der Betätigungseinrichtung oder dergleichen zumindest teilweise überwunden, so dass eine entsprechende Bewegung des Schaltelements bewirkt wird.

DE-A-199 53 292 offenbart ein Verfahren zur Steuerung einer Kupplung mit einer Steuereinrichtung mittels derer eine Steuerung der Kupplungsaktorik und eine Erfassung von Messdaten eines Sensors zur Ermittlung einer Kupplungsposition erfolgt.

Der vorliegenden Erfindung liegt nun die Aufgabe zugrunde, ein Verfahren und eine Vorrichtung vorzuschlagen, mit dem eine Positionsreferenzierung bei nicht selbsthaltenden Kupplungsaktoriken möglich ist.

Diese Aufgabe wird durch ein Verfahren mit den Merkmalen gemäß Anspruch 1 sowie durch eine Vorrichtung zur Durchführung des Verfahrens gelöst.

Erfindungsgemäß wird zur Verifizierung einer Kupplungsreferenzposition die Kupplungsaktorik für einen vorgegebenen ersten Zeitraum - dem ersten Passiv-Zeitraum - oder bis zum Auftreten eines Aktorstillstandes stromlos geschaltet. Dieser Passiv-Zeitraum ist mindestens so lang gewählt, wie ein kupplungssystemspezifischer Zeitraum innerhalb dessen die nicht selbsthaltende Kupplung aus jeder beliebigen Position entlang des Aktorweges und unter der Voraussetzung, dass kein Fehler im Kupplungssystem wie beispielsweise fehlerhafte Reibung vorliegt, an den Anschlag fahren kann. Ein solcher Zeitraum kann mit vorzugsweise 0,4 Sekunden angesetzt werden.

Unter Anschlag ist ein mechanischer Anschlag oder die Position eines Potentialminimums bzw. eines Kraftnulldurchgangs entlang des Aktorweges zu verstehen, die die nicht selbsthaltende Kupplungsaktorik einnimmt, wenn die Kupplung und die Kupplungsaktorik in fehlerfreiem Zustand vorliegen also beispielsweise keine unbeabsichtigten Widerstände, die beispielsweise durch Verschmutzung verursacht werden können, vorhanden sind. Bewegt sich der Aktor - kommend aus Richtung des zweiten, auf der gegenüberliegenden Seite des Aktorweges gelegenen Anschlags - entlang des Aktorweges auf das Potentialminimum bzw. den Kraftnulldurchgang zu, besteht eine anziehende Kraft auf den Aktor auf die Position des Nulldurchgangs zu. Passiert der Aktor den Nulldurchgang, so setzt eine stark repulsive Kraft ein, die die Wirkung eines mechanischen Anschlags repräsentiert.

Zu einem Aktorstillstand kann es kommen, wenn der Anschlag erreicht ist oder wenn es aufgrund von Fehlern oder Dejustierungen innerhalb der Kupplung zu erhöhter Reibung, zu Verspannungen oder Hysteresen kommt. Solche Störungen können entlang des Kupplungs- bzw. Aktorweges in unterschiedlicher Intensität auftreten und unter Umständen die Aktorik zum Stillstand bringen ohne das der Anschlag erreicht ist.

Ist der erste Passiv-Zeitraum verstrichen oder kommt es zu einem Aktorstillstand, wird die Kupplungsposition mit Hilfe eines Sensors beispielsweise eines Inkrementalwegsensors ermittelt und für einen späteren Vergleich hinterlegt.

Anschließend sieht das erfindungsgemäße Verfahren vor, die Kupplungsaktorik für einen vorgegebenen Aktiv-Zeitraum auf eine vorgegebene Weise zu bestromen, so dass durch den Aktormotor die Aktorik und die Kupplung bewegt werden, wenn nicht gegen einen bereits erreichten Anschlag gefahren wird.

Nach Ablauf des Aktiv-Zeitraums wird für einen vorgegebenen zweiten Passiv-Zeitraum oder bis zum Auftreten eines Aktorstillstandes die Kupplungsaktorik erneut stromlos geschaltet. Ist ein Aktorstillstand eingetreten oder der zweite Passiv-Zeitraum abgelaufen, wird in einer zweiten Messung die Kupplungsposition erneut bestimmt.

Stimmen die Kupplungspositionen aus erster und zweiter Messung innerhalb eines Streubereiches der Referenziergenauigkeit überein und liegen beide innerhalb eines plausiblen Wertebereiches für die Kupplungsreferenzposition, wird die gemessene Kupplungsposition als neue Kupplungsreferenzposition festgesetzt und gilt als verifiziert. Der Streubereich der Referenziergenauigkeit beträgt beispielsweise 2 Inkremente bzw. liegt vorzugsweise unterhalb von 0,2 Millimeter.

Hinsichtlich der Bestromung bestehen erfindungsgemäß drei Alternativen. Die Bestromung der Kupplungsaktorik insbesondere eines EC-Motors erfolgt so, dass dadurch eine Kraftwirkung in Richtung Kupplung Zu verursacht wird. Alternativ bewirkt die Bestromung eine Kraftwirkung in Richtung Kupplung Auf. Die Bestromung ist vorteilhafterweise so zu wählen, dass die Stärke der Kraft ausreicht, mechanische Widerstände auch bei tiefen Temperaturen oder hohem Lebensalter der Kupplung zu überwinden. Dazu wird der Aktormotor - beispielsweise in einem Pulsweitenmodulationsverfahren - mit einer Spannung beispielsweise betragsmäßig unterhalb von 5 Volt, bevorzugt mit 2 bis 3 Volt Spannung für einen Zeitraum - dem Aktiv-Zeitraum - unterhalb von 0.3 Sekunden bevorzugt für 0,1 bis 0,2 Sekunden bestromt. Wird in Richtung Kupplung Auf bestromt, kann alternativ auch mit betragsmäßig beispielsweise 12 Volt für beispielsweise 10 Millisekunden bestromt werden. Eine weitere Alternative besteht darin, die Bestromung so zu wählen, dass eine alternierende Kraftwirkung durch eine Wechselbestromung - einer so genannten Zitterbestromung - verursacht wird. In einer bevorzugten Ausführungsform erfolgt die Zitterbestromung als Rechteckwechselspannung mit einer vorgegebenen Frequenz von vorzugsweise 5 Hz.

In einer weiteren bevorzugten Ausführungsform wird die Bestromung während des Aktiv-Zeitraums sowie das Stromlosschalten während eines nachfolgenden Passiv-Zeitraums sowie das darauf folgende Durchführen einer weiteren Messung der Kupplungsposition nach Ablauf dieses Passiv-Zeitraums oder nach Eintreten eines Aktorstillstandes zyklisch, in einer Verfahrensschleife durchgeführt. Die Verfahrensschleife wird erst verlassen, wenn die aktuellste Messung mit dem hinterlegten Wert der direkt vorausgegangenen Messung innerhalb eines Streubereiches der Referenziergenauigkeit übereinstimmt und mindestens einer der beiden Messwerte innerhalb eines plausiblen Wertebereiches für die Kupplungsreferenzpositionen liegt. In diesem Fall wird die Verfahrensschleife abgebrochen und die aktuellste gemessene Kupplungsposition als neue Kupplungsreferenzposition festgesetzt und als verifiziert betrachtet.

In einer weiteren Ausführungsform wird die Verfahrensschleife abgebrochen, wenn die aktuellste Messung mit dem hinterlegten Wert der direkt vorausgegangenen Messung innerhalb eines Streubereiches der Referenziergenauigkeit übereinstimmt und beide Messwerte innerhalb eines plausiblen Wertebereiches für die Kupplungsreferenzpositionen liegen.

In einer weiteren Ausführungsform wird der Mittelwert aus den beiden gemessenen Kupplungspositionen gebildet und als Kupplungsreferenzposition festgesetzt.

In einer weiteren bevorzugten Ausführungsform wird nach Verstreichen des ersten Passiv-Zeitraums oder bei Auftreten eines Aktorstillstands und anschließender Ermittlung der Kupplungsposition überprüft, ob die ermittelte Kupplungsposition innerhalb eines plausiblen Wertebereiches für die Kupplungsreferenzpositionen liegt. Ist dies der Fall, wird diese als neue Kupplungsreferenzposition übernommen und das Verfahren beendet.

In einer weiteren bevorzugten Ausführungsform wird nach Verstreichen des ersten Passiv-Zeitraums oder bei Auftreten eines Aktorstillstands und anschließender Ermittlung der Kupplungsposition überprüft, ob die Abweichung der ermittelten Kupplungsposition von der aktuell gültigen Kupplungsreferenzpositionen innerhalb des Streubereiches der Referenziergenauigkeit liegt. Ist dies der Fall, wird die ermittelte Kupplungsposition als neue Kupplungsreferenzposition übernommen und das Verfahren beendet.

Mit dem erfindungsgemäßen Verfahren und der erfindungsgemäßen Vorrichtung kann das Auffinden der Kupplungsreferenzposition bei nicht selbsthaltenden Kupplungen stromlos erfolgen.

Weitere Vorteile und vorteilhafte Ausgestaltungen der Erfindung sind Gegenstand der nachfolgenden Figuren sowie deren Beschreibung.

Es zeigen im Einzelnen:
Figur 1: Schematisch den erfindungsgemäßen Verfahrensverlauf.
Figur 2: Vorrichtung mit schematischer Darstellung der zusammenwirkenden Komponenten.

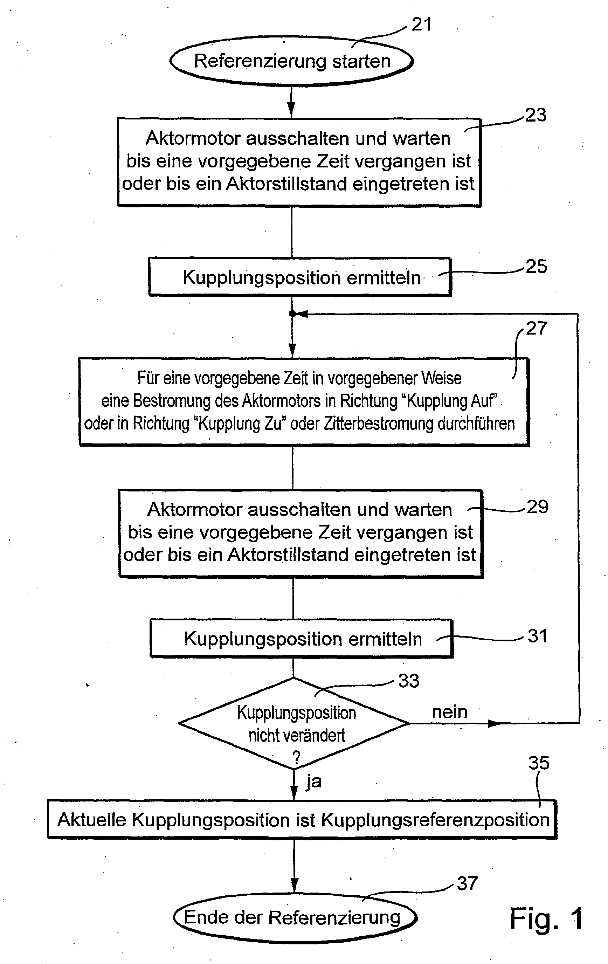

In Figur 1 ist in einem Flussdiagramm zur Veranschaulichung der Positionsreferenzierung der Verfahrensablauf schematisch dargestellt. Ist es erforderlich, eine Referenzierung der Kupplungsposition durchzuführen, wird ausgehend vom Verfahrensschritt 21 im Warteschritt 23 der Aktormotor für eine vorgegeben Zeit - dem ersten Passiv-Zeitraum - ausgeschaltet, d.h. stromlos geschaltet. Die Kupplungsaktorik ist also für diesen Zeitraum passiv und wird von der nicht selbsthaltenden Kupplung mitbewegt. Die Kupplung bewegt sich in Richtung eines Anschlags sofern sie sich dort noch nicht befindet und sofern kein Fehler vorliegt, der die Bewegung beispielsweise aufgrund von erhöhter Reibung verhindert. Bevorzugt ist das Verfahren für den selbständig öffnenden Kupplungstyp, also für zwangsweise offene, zugedrückte Kupplungen vorgesehen, doch ist es ebenso bei zwangsweise geschlossenen Kupplungen anwendbar. Während dieses ersten Passiv-Zeitraums wird auch die Veränderung der Kupplungsposition überwacht, so dass ein Stillstand festgestellt werden kann. Ist das Ende des ersten Passiv-Zeitraums erreicht oder kommt die Kupplung bzw. die Kupplungsaktorik zum Stillstand noch bevor der Passiv-Zeitraum abgelaufen ist, so wird verfahrensgemäß im Ermittlungsschritt 25 die Kupplungsposition bestimmt und abrufbar hinterlegt. Anschließend wird im Bestromungsschritt 27 für eine vorgegebene Zeit - dem Aktiv-Zeitraum - eine Bestromung des Aktormotors durchgeführt, so dass die Kupplungsaktorik insbesondere der Aktormotor wieder aktiv ist. Erfindungsgemäß sieht das Verfahren drei alternative Bestromungsvarianten vor. Eine Variante ist die so genannte Zitterbestromung, bei der mittels Wechselspannung einer vorgegebenen Frequenz eine zeitlich abwechselnde Kraftwirkung in Richtung Kupplung Auf bzw. Zu auftritt. Die beiden anderen Varianten bewirken während des Aktiv-Zeitraums eine Kraftwirkung in Richtung Kupplung Auf bzw. in Richtung Kupplung Zu. Mit Hilfe der Bestromungsvarianten können Widerstände beispielsweise verursacht durch Reibung entlang des Aktorweges überwunden werden. Nach der Aktivierung der Kupplungsaktorik im Bestromungsschritt 27 folgt erfindungsgemäß im Warteschritt 29 ein erneutes Passivschalten der Aktorik durch Abschalten der Bestromung. Verfahrensgemäß geschieht dabei im Warteschritt 29 dasselbe wie im Warteschritt 23. Ist das Ende dieses Passiv-Zeitraums erreicht oder kommt die Kupplung bzw. die Kupplungsaktorik zum Stillstand noch bevor der Passiv-Zeitraum abgelaufen ist, wird im Ermittlungsschritt 31 die Kupplungsposition erneut bestimmt und hinterlegt. Diese Position wird im Vergleichsschritt 33 mit der zuvor gewonnenen Kupplungsposition verglichen. Liegt die Abweichung der beiden Positionen im Streubereich der Referenziergenauigkeit und liegen gleichzeitig beide Werte innerhalb eines plausiblen Wertebereiches für die Kupplungsreferenzposition so wird im Verifizierungsschritt 35 die zuletzt ermittelte Kupplungsposition als Kupplungsreferenzposition festgesetzt und gilt als verifiziert. Ist die Bedingung im Vergleichsschritt 33 nicht erfüllt, so kehrt das Verfahren zum Bestromungsschritt 27 zurück und fährt dort fort. Mit der Verifizierung der Kupplungsreferenzposition im Verifizierungsschritt 35 endet das Verfahren im Verfahrensschritt 37.

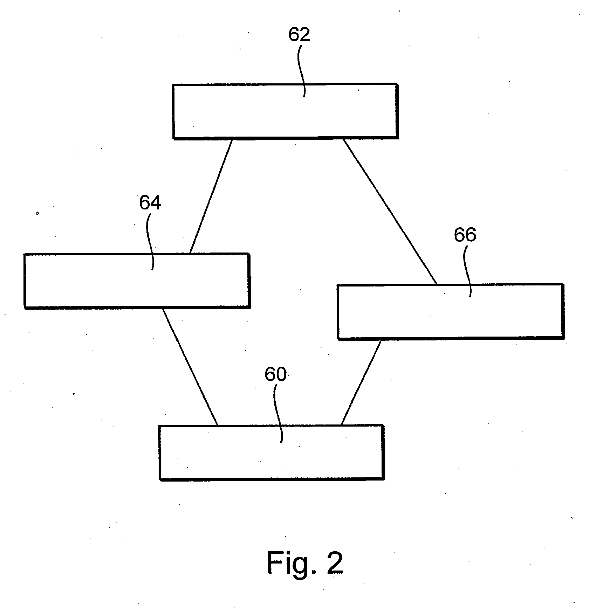

Figur 2 stellt schematisiert die Vorrichtung zur Kupplungspositionsreferenzierung sowie eine schematisierte Darstellung der zusammenwirkenden Komponenten dar. Empfängt die Steuereinrichtung 60 eine Referenzierungsanfrage oder veranlassen andere Verfahren in der Steuereinrichtung 60 oder in einer anderen Steuereinrichtung, dass eine Kupplungspositionsreferenzierung durchgeführt werden muss, so veranlasst die Steuereinrichtung 60 eine Passivschaltung des Aktormotors in der Kupplungsaktorik 64. Unter Passivschaltung soll ein Abschalten der Bestromung der Kupplungsaktorik 64 verstanden werden, so dass die nicht selbsthaltende Kupplung 62 in Richtung eines Anschlags fährt, wenn sie dort noch nicht ist und sofern keine fehlerhaften mechanischen Widerstände sie daran hindern. Ist das Ende des ersten Passiv-Zeitraums erreicht, während dem die Kupplungsaktorik 64 passiv geschaltet ist oder kommt die Kupplung 62 bzw. die Kupplungsaktorik 64 zum Stillstand noch bevor der Passiv-Zeitraum abgelaufen ist, so wird durch die Steuereinrichtung 60 die Messung und eine abrufbare Hinterlegung der gemessenen Kupplungsposition veranlasst. Das Feststellen des Stillstands der Kupplung sowie die Kupplungspositionsmessung erfolgt mit Hilfe eines Sensors 66, der in einer bevorzugten Ausführungsform ein Inkrementalwegmesssensor ist. Anschließend veranlasst die Steuereinrichtung 60 die Aktivierung der Kupplungsaktorik 64, insbesondere des Aktormotors während des Aktiv-Zeitraums. Die Aktivierung erfolgt durch Bestromung des Aktormotors. In einer bevorzugten Ausführungsform veranlasst die Steuereinrichtung eine Bestromung in Form von Zitterbestromung. In einer weiteren bevorzugten Ausführungsform veranlasst die Steuereinrichtung eine Bestromung, so dass durch die Kupplungsaktorik 64 eine Kraftwirkung in Richtung Kupplung Schließen bewirkt wird. In einer dritten bevorzugten Ausführungsform erfolgt die Bestromung in einer Weise, so dass Kraftwirkung in Richtung Kupplung Öffnen verursacht wird. Nach Ablauf des Aktiv-Zeitraums veranlasst die Steuereinrichtung 60, dass die Kupplungsaktorik 64 wieder passiv geschaltet wird bis der Passiv-Zeitraum vergangen ist oder bis die Kupplungsaktorik 64 zum Stillstand gekommen ist. Dies wird mittels des Sensors 66 zur Ermittlung der Kupplungsposition ausgeführt. Anschließend veranlasst die Steuereinrichtung wieder mittels des Sensors 66 die Feststellung und Speicherung der Kupplungsposition. Anschließend veranlasst die Steuereinrichtung 60 einen Vergleich dieser Position mit der unmittelbar zuvor gewonnenen und abrufbar abgespeicherten Kupplungsposition. Liegt die Abweichung der beiden Positionen im Streubereich der Referenzierunggenauigkeit und liegen gleichzeitig beide Werte innerhalb eines plausiblen Wertebereichs für die Kupplungsreferenzposition, so setzt die Steuereinrichtung 60 die zuletzt ermittelte Kupplungsposition als Kupplungsreferenzposition fest und verifiziert diese. Wird durch die Steuereinrichtung 60 festgestellt, dass von den beiden Bedingungen nur eine oder gar keine erfüllt ist, so veranlasst die Steuereinrichtung 60, dass von neuem die Aktivierung der Kupplungsaktorik während des Aktivzeitraums und die anschließende Passivschaltung der Kupplungsaktorik 64 während des Passiv-Zeitraums sowie die Kupplungspositionsermittlung durchgeführt wird. Das zyklische Durchlaufen dieser Verfahrensschleife wird durch die Steuereinrichtung 60 solange veranlasst, bis die beiden Bedingungen erfüllt sind und die Steuereinrichtung 60 das Verlassen der Schleife veranlasst.

### Bezugszeichenliste

- 1: Verfahrensschritt
- 23: Warteschritt
- 25: Ermittlungsschritt
- 27: Bestromungsschritt
- 29: Warteschritt
- 31: Ermittlungsschritt
- 33: Vergleichsschritt
- 35: Verifizierungsschritt
- 37: Verfahrensschritt
- 60: Steuereinrichtung
- 62: nicht selbsthaltende Kupplung
- 64: Kupplungsaktorik
- 66: Sensor zur Ermittlung einer Kupplungsposition

## Patentansprüche

1. Verfahren zur Steuerung einer mittels einer Kupplungsaktorik (64) auf Grundlage von Bestromung betätigbaren nicht selbsthaltenden Kupplung (62) zwischen einer Antriebseinheit und einem Getriebe, mit einer Steuereinrichtung (60) mittels derer eine Steuerung der Kupplungsaktorik (64) und eine Erfassung von Messdaten eines Sensors (66) zur Ermittlung einer Kupplungsposition erfolgt, **dadurch gekennzeichnet, dass** zur Verifizierung einer Kupplungsreferenzposition die Kupplungsaktorik (64) für einen vorgegebenen ersten Passiv-Zeitraum oder bis zum Auftreten eines Aktorstillstandes stromlos geschaltet wird und danach die erreichte Kupplungsposition in einer ersten Messung ermittelt wird und für einen vorgegebenen Aktiv-Zeitraum eine Bestromung der Kupplungsaktorik (64) erfolgt und die Kupplungsaktorik (64) anschließend für einen vorgegebenen weiteren Passiv-Zeitraum oder bis zum Auftreten eines Aktorstillstandes erneut stromlos geschaltet wird und danach in einer weiteren Messung die Kupplungsposition bestimmt und anschließend überprüft wird, ob die gemessenen Kupplungspositionen als neue Kupplungsreferenzposition verifiziert werden kann.

2. Verfahren nach Anspruch 1, **dadurch gekennzeichnet, dass** nach Durchführung der ersten Messung zyklisch, in einer Verfahrensschleife zu Beginn der Verfahrensschleife für den vorgegebenen Aktiv-Zeitraum eine Bestromung der Kupplungsaktorik (64) erfolgt und die Kupplungsaktorik (64) anschließend für den vorgegebenen weiteren Passiv-Zeitraum oder bis zum Auftreten des Aktorstillstandes erneut stromlos geschaltet wird und danach in einer weiteren Messung die Kupplungsposition bestimmt und anschließend überprüft wird, ob eine der gemessenen Kupplungspositionen als neue Kupplungsreferenzposition verifiziert werden kann und in diesem Fall auch die Verfahrensschleife beendet wird, andernfalls wieder an den Beginn der Verfahrensschleife zurückgekehrt und sie abermals durchlaufen wird.

3. Verfahren nach Anspruch 2, **dadurch gekennzeichnet, dass** die letzte, aktuellste gemessene Kupplungspositionen als Kupplungsreferenzposition verifiziert und festgesetzt wird, wenn die in der letzten und in einer vorausgegangenen Messung bestimmten Kupplungspositionen übereinstimmen und innerhalb eines plausiblen Wertebereiches für die Kupplungsreferenzposition liegen.

4. Verfahren nach Anspruch 1, **dadurch gekennzeichnet, dass** für den vorgegebenen Aktiv-Zeitraum eine Bestromung der Kupplungsaktorik (64) erfolgt und die Kupplungsaktorik (64) anschließend für einen vorgegebenen zweiten Passiv-Zeitraum oder bis zum Auftreten eines Aktorstillstandes erneut stromlos geschaltet wird und danach in einer zweiten Messung die Kupplungsposition bestimmt und anschließend überprüft wird, ob die gemessene Kupplungsposition als neue Kupplungsreferenzposition verifiziert werden kann.

5. Verfahren nach Anspruch 4, **dadurch gekennzeichnet, dass** die zweite gemessene Kupplungsposition als Kupplungsreferenzposition verifiziert und festgesetzt wird, wenn die in erster und zweiter,Messung bestimmten Kupplungspositionen übereinstimmen und innerhalb eines plausiblen Wertebereiches für die Kupplungsreferenzposition liegen.

6. Verfahren nach Anspruch 1 bis 5, **dadurch gekennzeichnet, dass** die während des Aktiv-Zeitraums erfolgende Bestromung der Kupplungsaktorik (64) eine Kraftwirkung in Richtung Kupplung Zu verursacht.

7. Verfahren nach Anspruch 1 bis 5, **dadurch gekennzeichnet, dass** die während des Aktiv-Zeitraums erfolgende Bestromung der Kupplungsaktorik (64) eine Kraftwirkung in Richtung Kupplung Auf verursacht.

8. Verfahren nach Anspruch 1 bis 5, **dadurch gekennzeichnet, dass** die während des Aktiv-Zeitraums erfolgende Bestromung der Kupplungsaktorik (64) eine zeitlich wechselnde Kraftwirkung .verursacht.

9. Verfahren nach Anspruch 1 bis 8, **dadurch gekennzeichnet, dass** die Bestromung der Kupplungsaktorik nur mit solchen Spannungen oder Strömen erfolgt, die zu keiner thermischen Überlastung der Aktormotoren führen.

10. Vorrichtung zur Steuerung einer mittels einer Kupplungsaktorik (64) auf Grundlage von Bestromung betätigbaren nicht selbsthaltenden Kupplung (62) zwischen einer Antriebseinheit und einem Getriebe, mit einer Steuereinrichtung (60) mittels derer eine Steuerung der Kupplungsaktorik (64) und eine Erfassung von Messdaten eines Sensors (66) zur Ermittlung einer Kupplungsposition erfolgt, **dadurch gekennzeichnet, dass** die Steuereinrichtung (60) so ausgeführt und eingerichtet ist, dass die Steuerung der Kupplungsaktorik mit einen Verfahren gemäß den Ansprüchen 1 bis 9 ausgeführt wird.

## Claims

1. Method for controlling a non-self-holding clutch (62), which can be actuated by means of a clutch actuator (64) on the basis of a supply of electrical current, between a drive unit and a gearbox, having a control device (60) which serves to control the clutch actuator (64) and detect measurement data from a sensor (66) for determining a clutch position, **characterized in that**, to verify a clutch reference position, the clutch actuator (64) is switched into a currentless state for a predefined first passive time period or until the actuator comes to a standstill and thereafter the clutch position attained is determined in a first measurement, and the clutch actuator (64) is supplied with electrical current for a predefined active time period and the clutch actuator (64) is subsequently switched into the currentless state again for a predefined further passive time period or until the actuator comes to a standstill and thereafter the clutch position is determined in a further measurement, and it is subsequently checked whether the measured clutch positions can be verified as a new clutch reference position.

2. Method according to Claim 1, **characterized in that**, after the first measurement is carried out, cyclically in a method loop the clutch actuator (64) is at the start of the method loop supplied with current for the predefined active time period and the clutch actuator (64) is subsequently switched into the currentless state again for the predefined further passive time period or until the actuator comes to a standstill and thereafter the clutch position is determined in a further measurement, and it is subsequently checked whether one of the measured clutch positions can be verified as a new clutch reference position, and if this is the case the method loop is also ended, otherwise a return is made to the start of the method loop again and said method loop is run through again.

3. Method according to Claim 2, **characterized in that** the latest, most recently measured clutch positions are verified and set as a clutch reference position if the clutch positions determined in the latest measurement and in a preceding measurement correspond and lie within a plausible value range for the clutch reference position.

4. Method according to Claim 1, **characterized in that** the clutch actuator (64) is supplied with electrical current for the predefined active time period and the clutch actuator (64) is subsequently switched into the currentless state again for a predefined second passive time period or until the actuator comes to a standstill and thereafter the clutch position is determined in a second measurement, and it is subsequently checked whether the measured clutch position can be verified as a new clutch reference position.

5. Method according to Claim 4, **characterized in that** the second measured clutch position is verified and set as a clutch reference position if the clutch positions determined in the first and second measurements correspond and lie within a plausible value range for the clutch reference position.

6. Method according to Claims 1 to 5, **characterized in that** the supply of electrical current to the clutch actuator (64) which takes place during the active time period generates a force action in the "clutch closed" direction.

7. Method according to Claims 1 to 5, **characterized in that** the supply of electrical current to the clutch actuator (64) which takes place during the active time period generates a force action in the "clutch open" direction.

8. Method according to Claims 1 to 5, **characterized in that** the supply of electrical current to the clutch actuator (64) which takes place during the active time period generates a force action which varies over time.

9. Method according to Claims 1 to 8, **characterized in that** the supply of electrical current to the clutch actuator takes place only with voltages or currents which do not lead to thermal overloading of the actuator motors.

10. Device for controlling a non-self-holding clutch (62), which can be actuated by means of a clutch actuator (64) on the basis of a supply of electrical current, between a drive unit and a gearbox, having a control device (60) which serves to control the clutch actuator (64) and detect measurement data from a sensor (66) for determining a clutch position, **characterized in that** the control device (60) is designed and set up such that the control of the clutch actuator is carried out by means of a method according to Claims 1 to 9.

## Revendications

1. Procédé de commande d'un embrayage (62) non auto-rétentif pouvant être actionné au moyen d'un système d'actionneur d'embrayage (64) à partir d'une alimentation en courant, entre une unité d'entraînement et une transmission, avec un dispositif de commande (60) au moyen duquel sont effectuées une commande du système d'actionneur d'embrayage (64) et une détection de données de mesure d'un capteur (66) pour la détection d'une position d'embrayage, **caractérisé en ce que** pour vérifier une position de référence d'embrayage, le système d'actionneur d'embrayage (64) est commuté sans courant pendant un premier intervalle de temps passif prédéterminé ou jusqu'à l'apparition d'un arrêt de l'actionneur, et ensuite la position d'embrayage atteinte est déterminée au cours d'une première mesure, et une alimentation en courant du système d'actionneur d'embrayage (64) a lieu pendant un intervalle de temps actif prédéterminé et le système d'actionneur d'embrayage (64) est ensuite à nouveau commuté sans courant pendant un intervalle de temps passif supplémentaire prédéterminé ou jusqu'à l'apparition d'un arrêt de l'actionneur, et ensuite on détermine au cours d'une autre mesure la position d'embrayage et on vérifie ensuite si les positions d'embrayage mesurées peuvent être vérifiées en tant que nouvelle position de référence d'embrayage.

2. Procédé selon la revendication 1, **caractérisé en ce qu'**après la réalisation de la première mesure, on effectue de manière cyclique, dans une boucle de processus au début de la boucle de processus pendant l'intervalle de temps actif prédéterminé une alimentation en courant du système d'actionneur d'embrayage (64) et le système d'actionneur d'embrayage (64) est ensuite commuté à nouveau sans courant pendant l'intervalle de temps passif supplémentaire prédéterminé ou jusqu'à l'apparition de l'arrêt de l'actionneur, et ensuite au cours d'une mesure supplémentaire, on détermine la position d'embrayage et l'on vérifie ensuite si l'une des positions d'embrayage mesurées peut être vérifiée en tant que nouvelle position de référence d'embrayage, et dans ce cas la boucle de processus est également terminée, et sinon, on revient au début de la boucle de processus et on l'exécute encore une fois.

3. Procédé selon la revendication 2, **caractérisé en ce que** les dernières positions d'embrayage mesurées les plus récentes sont vérifiées en tant que position de référence d'embrayage, et l'on établit si les positions d'embrayage déterminées dans la dernière mesure et une mesure précédente coïncident et se situent à l'intérieur d'une plage de valeurs plausible pour la position de référence d'embrayage.

4. Procédé selon la revendication 1, **caractérisé en ce que** pour l'intervalle de temps actif prédéterminé, il se produit une alimentation en courant du système d'actionneur d'embrayage (64) et le système d'actionneur d'embrayage (64) est ensuite commuté à nouveau sans courant pendant un deuxième intervalle de temps passif prédéterminé ou jusqu'à l'apparition d'un arrêt de l'actionneur, et ensuite, au cours d'une deuxième mesure, on détermine la position d'embrayage et ensuite on vérifie si la position d'embrayage mesurée peut être vérifiée en tant que nouvelle position de référence d'embrayage.

5. Procédé selon la revendication 4, **caractérisé en ce que** la deuxième position d'embrayage mesurée est vérifiée en tant que position de référence d'embrayage et l'on établit si les positions d'embrayage déterminées au cours de la première et de la deuxième mesure coïncident et se situent à l'intérieur d'une plage de valeurs plausibles pour la position de référence d'embrayage.

6. Procédé selon les revendications 1 à 5, **caractérisé en ce que** l'alimentation en courant du système d'actionneur d'embrayage (64) se produisant pendant l'intervalle de temps actif provoque une application de force dans la direction de la fermeture de l'embrayage.

7. Procédé selon les revendications 1 à 5, **caractérisé en ce que** l'alimentation en courant du système d'actionneur d'embrayage (64) se produisant pendant l'intervalle de temps actif provoque une application de force dans la direction de l'ouverture de l'embrayage.

8. Procédé selon les revendications 1 à 5, **caractérisé en ce que** l'alimentation en courant du système d'actionneur d'embrayage (64) se produisant pendant l'intervalle de temps actif provoque une application de force alternant dans le temps.

9. Procédé selon les revendications 1 à 8, **caractérisé en ce que** l'alimentation en courant du système d'actionneur d'embrayage s'effectue seulement avec des tensions ou des courants qui n'entraînent aucune surcharge thermique des moteurs d'actionneur.

10. Dispositif pour commander un embrayage (62) non auto-rétentif pouvant être actionné au moyen d'un système d'actionneur d'embrayage (64) à partir d'une alimentation en courant, entre une unité d'entraînement et une transmission, avec un dispositif de commande (60) au moyen duquel sont effectuées une commande du système d'actionneur d'embrayage (64) et une détection de données de mesure d'un capteur (66) pour la détection d'une position d'embrayage, **caractérisé en ce que** le dispositif de commande (60) est réalisé et conçu de telle sorte que la commande du système d'actionneur d'embrayage soit effectuée avec un procédé selon l'une quelconque des revendications 1 à 9.
